(19) Europäisches Patentamt
European Patent Office
Office européen des brevets

(11) **EP 3 730 926 B1**

(12) **EUROPÄISCHE PATENTSCHRIFT**

(45) Veröffentlichungstag und Bekanntmachung des Hinweises auf die Patenterteilung:
**01.03.2023 Patentblatt 2023/09**

(21) Anmeldenummer: **19171265.2**

(22) Anmeldetag: **26.04.2019**

(51) Internationale Patentklassifikation (IPC):
***G01N 11/00*** *(2006.01)*

(52) Gemeinsame Patentklassifikation (CPC):
**G01N 11/00;** G01N 2011/008

(54) **VERFAHREN UND SYSTEM ZUR MESSUNG ODER ÜBERWACHUNG DER VISKOSITÄT FLIESSENDER MATERIALIEN**

METHOD AND SYSTEM FOR MEASURING OR MONITORING THE VISCOSITY OF FLOWING MATERIALS

PROCÉDÉ ET SYSTÈME DE MESURE OU DE SURVEILLANCE DE LA VISCOSITÉ DE MATIÈRES COULANTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.10.2020 Patentblatt 2020/44**

(73) Patentinhaber: **Helmholtz-Zentrum Potsdam - Deutsches GeoForschungsZentrum GFZ Stiftung des Öffentlichen Rechts des Landes Brandenburg 14473 Potsdam (DE)**

(72) Erfinder:
• **LIPUS, Martin**
  **12055 Berlin (DE)**
• **REINSCH, Thomas**
  **44795 Bochum (DE)**
• **HENNINGES, Jan**
  **14089 Berlin (DE)**
• **KRANZ, Stefan**
  **10405 Berlin (DE)**

(74) Vertreter: **Hertin und Partner Rechts- und Patentanwälte PartG mbB Kurfürstendamm 54/55 10707 Berlin (DE)**

(56) Entgegenhaltungen:
WO-A1-2013/165428     JP-A- H07 333 133
JP-U- 3 139 378       US-A1- 2017 059 428

**Beschreibung**

Die Erfindung betrifft bevorzugt in einem ersten Aspekt ein Verfahren zur Messung und/oder Überwachung der Viskosität eines in einem Kanal fließenden Materials, wobei auf Basis einer ortverteilten Dehnungsmessung entlang eines Messkabels in dem Kanal mindestens abschnittsweise ein Dehnungsgradient bestimmt wird mit dessen Hilfe die Messung und/oder Überwachung der Viskosität erfolgt. In einem weiteren Aspekt betrifft die Erfindung ein System zur bevorzugten Durchführung des Verfahrens umfassend ein dehnungssensitives Messkabel, eine Messeinheit sowie eine Datenverarbeitu ngsvorrichtu ng.

Hintergrund und Stand der Technik

In technischen Systemen mit einem Prozessfluid ist in vielen Fällen die Kontrolle der physikalischen Parameter des Fluides für die Prozesssteuerung wesentlich. Die Parameter können beispielsweise die Temperatur, Druck, Dichte, chemische Zusammensetzung, Fließgeschwindigkeit und die Viskosität des Fluides sein. Diese Größen können sich sowohl zeitabhängig als auch ortsabhängig, beispielsweise etwa entlang einer Rohrleitung, im Prozess verändern.

Entsprechende detaillierte Messgrößen sind für eine optimale Prozesssteuerung von großem Nutzen. Dies trifft insbesondere auch für Erkundungs-, Produktions-, Injektions- oder Monitoringbohrungen zu. In diesen Fällen sind Aussagen zur Viskosität eines Fluides besonderem Interesse, welches durch eine Bohrung oder einen Teil der Bohrung strömt oder geleitet wird oder welches bei der Erstellung der Bohrung im Ringraum zwischen Verrohrung und Gesteinsformation fließt (Zement, Spülung,...).

Bekanntermaßen werden fossile Brennstoffe, wie Erdöl oder Erdgas, unter Verwendung von Bohrlöchern aus Gesteinsformationen gefördert werden. Auch im Bereich der Geothermie, der Trinkwasserförderung, bei der Injektion von Flüssigkeiten, zum Beispiel zur Entsorgung oder zur Druckhaltung unter Tage, bei der Trinkwasserüberwachung oder bei der Überwachung von Wasserspiegeln werden Bohrlöcher verwendet. Eine ständige Überwachung oder Messung der Viskosität, der in den Bohrlöchern fließenden Fluiden erlaubt eine effiziente Überwachung des Gesamtprozesses.

Auch bei der Installation von Tiefbohrungen sind Viskositätsmessungen von besonderem Interesse. Zur Stabilisierung eines Bohrlochs wird häufig Zement oder ein anderes aushärtendes oder dichtendes Material genutzt, das in den Ringraum zwischen Verrohrung und Gesteinsformation, zwischen zwei Verrohrungen beim Bau einer Bohrung oder auch in der Bohrung bei einer abschließenden Verfüllung eingefüllt wird. Dabei muss gewährleistet werden, dass die Zementierung dicht ist und innerhalb des Materials keine hohen Spannungen auftreten, welche bis zum Versagen belastet werden. Viskositätsmessungen können sehr aufschlussreich sein, um im fließenden Zement das Auftreten von Heterogenitäten, beispielsweise Luftblasen, zuverlässig zu erkennen. Weiterhin können Viskositätsmessungen dazu dienen Eigenschaften der Suspension zu überwachen und mögliche Verunreinigungen, Verdünnungseffekte oder den Zutritt von Gasen zuverlässig zu erkennen.

Im Stand der Technik ist die Bestimmung von Fluideigenschaften *in-situ* in Bohrlöchern weitestgehend mittels Sonden und punktweisen Messungen bekannt.

Beispielsweise ist aus der US 6,588,266 B2 ein System bekannt, welches linear angeordnete Einzelsensoren nutzt, um in Bohrlöchern Temperaturen, Drücke oder die Fließraten von Materialien zu messen. Die Installation und Wartung derartiger System ist jedoch aufwändig und eine ortsabhängige Auflösung durch die Anzahl der Detektoren begrenzt.

Im Stand der Technik gibt es zudem Bestrebungen mittels faseroptischer Messkabel kontinuierliche Bestimmung von Fluideigenschaften in einem Bohrloch mittels höherer Ortauflösung durchzuführen. In der US 2011 0088462 A1 wird hierzu ein faseroptisches Messkabel in ein Bohrloch eingelassen, um anhand von Messungen der Dehnung des Messkabels die Bewegung des fließenden Materials zu überwachen. Hierbei wird ausgenutzt, dass das fließende Fluid in Abhängigkeit der Fließgeschwindigkeit unterschiedliche Scherkräfte auf das Messkabel ausübt. Nachteilig an dem vorgeschlagenen Verfahren ist jedoch, dass bereits kleine Temperaturänderungen im Bohrloch zu Dehnungen des Messkabels führen, welche Messungen der Scherkräfte überlagern. JP H07 333133 A1 betrifft eine Verbesserung von Verfahren zur Aushebung von Tunneln, welche auf einer Viskositätsmessung des ausgehobenen Bodens (excavated soil) basiert. Zu diesem Zweck offenbart das document eine Verwendung zweier Flüssigkeitswiderstände (fluid resistor) bei welchen es sich um leitfähige Kabel handeln kann, deren elektrischer Widerstand sich in Abhängigkeit der wirkenden Fluidkräfte ändert. Die Messkabel werden quer zur Fließrichtung an zwei Positionen hintereinander gespannt und können Kugeln zur Erhöhung des Flüssigkeitswiderstandes aufweisen. Anhand der bestimmbaren Messwiderstände kann auf die jeweilige Kraft und Fließgeschwindigkeit geschlossen werden. Zur Bestimmung der Fließgeschwindigkeit wird ausgenutzt, dass das Fließverhalten Fluktuationen aufweist, welche mit zeitlichem Abstand an den Messkabeln detektiert werden. Aus Kraft und Geschwindigkeit soll die Viskosität berechnet werden.

WO 2013/165428 A1 betrifft ein Magnetofluid-Densitometer, welches ein Rohr zur Aufnahme von Flüssigkeit sowie einen daran befestigten spulenbetriebenen Magneten aufweist. Mittels des Magneten kann das Rohr zur Vibration angeregt werden. Anhand der Bestimmung der Antwortfunktion, beispielsweise einer Resonanzfrequenz oder Q-Faktors soll es möglich sein die Dichte bzw. Viskosität der Flüssigkeit zu bestimmen. Die Vorrichtung kann auch Dehnungsmessstreifen umfassen.

Außerdem wird mit den im Stand der Technik vorgeschlagenen Verfahren vorwiegend Aussagen über die Fließrate des Flüssigkeiten getroffen, ohne Mittel zur Messung eine ort- oder zeitaufgelösten Viskosität bereitzustellen.

Es besteht somit ein Bedarf an alternative Methoden, um eine Messung oder Überwachung der Viskosität fließender Materialien bereitzustellen.

Aufgabe der Erfindung

Eine Aufgabe der vorliegenden Erfindung war es dementsprechend, ein Verfahren und ein System bereitzustellen, welche nicht die Mängel und Nachteile des Standes der Technik aufweisen. Insbesondere war es eine Aufgabe der Erfindung ein Verfahren und System zur Verfügung zu stellen, welches mit hoher Orts- und Zeitauflösung die Viskositätseigenschaften von bewegten Fluiden bestimmen kann.

Zusammenfassung der Erfindung

Die Aufgabe wird durch die Merkmale der unabhängigen Ansprüche gelöst. Bevorzugte Ausführungsformen der Erfindung sind in den abhängigen Ansprüchen beschrieben.

In einem ersten Aspekt betrifft die Erfindung bevorzugt ein Verfahren zur Messung und/oder Überwachung der Viskosität eines in einem Kanal fließenden Materials umfassend die folgenden Schritte

    a. Einbringen eines dehnungssensitiven Messkabels in den Kanal

    b. Messung einer ortverteilten Dehnungsmessung entlang des Messkabels

    c. Mindestens abschnittsweise Bestimmung eines Dehnungsgradienten aus den Messdaten über die ortsverteilte Dehnung des Messkabels

    d. Messung und/oder Überwachung der Viskosität des in dem Kanal fließenden Materials anhand des ermittelten Dehnungsgradienten

Im Sinne der Erfindung soll unter einem "Kanal" bevorzugt jegliches Element verstanden werden, welches den Fluss eines fließenden Materials zumindest teilweise leitet. Der Kanal kann eine beliebige Querschnittsform haben (kreisförmig, oval, dreieckig, unregelmäßig, quadratisch oder rechteckig oder dergleichen) und kann bedeckt oder unbedeckt sein. Bei Ausführungsformen, bei denen es vollständig bedeckt ist, kann mindestens ein Abschnitt des Kanals einen vollständig umschlossenen Querschnitt aufweisen, oder der gesamte Kanal kann über seine gesamte Länge mit Ausnahme seines Einlasses und Auslasses vollständig umschlossen sein (z.B. als Hohlkörper oder in Rohrform). Ein Kanal kann auch ein Aspektverhältnis (Länge zu durchschnittlicher Querschnittsabmessung) von mindestens 2: 1, typischer mindestens 3: 1, 5: 1, 10: 1, 15: 1, 20: 1 oder mehr aufweisen. Bevorzugt kann der Kanal beispielsweise ein Rohr oder ein Bohrloch sein. Vorteilhafterweise eignet sich das Verfahren auch für sehr lange Kanäle, wie beispielsweise Bohrlöcher. Der Kanal kann daher bevorzugte Längen von mehr als 10 m, mehr als 50 m oder mehr als 100 m aufweisen.

Das Verfahren soll bevorzugt die Messung und/oder Überwachung der Viskosität eines fließenden Material in einem solchen Kanal erlauben. Hierbei kann es sich beliebige fließenden Materialien oder Flüssigkeiten handeln, wie beispielsweise wässrige Flüssigkeiten oder ölige Flüssigkeiten, aber auch das Fließverhalten von Pulvern kann vorteilhafterweise gemessen oder überwacht werden.

Zu diesem Zweck wird in dem Verfahren ein dehnungssensitives Messkabels in den Kanal eingebracht und eine ortverteilten Dehnungsmessung entlang des Messkabels durchgeführt. Das Messkabel ist bevorzugt im Hinblick auf die Dimensionierung an den Kanal angepasst. D.h. das Messkabel hat bevorzugt einen deutlichen kleineren Querschnitt als der Kanal, um das Fließverhalten des fließenden Materials nicht stark zu beeinflussen. Bevorzugte Querschnittsdimensionen des Messkabels können beispielsweise in einem Bereich zwischen 1 mm und 10 cm, bevorzugt 1 mm und 2 cm liegen.

Weiterhin ist es bevorzugt, dass die Länge des Messkabels nahezu der Länge des Kanals entspricht oder aber mindestens einen signifikanten Teilabschnitt des Kanals abdecken kann, beispielsweise ein 25%, 50%, 75% oder mehr.

Dehnungssensitiv meint bevorzugt, dass das Messkabel im Wesentlichen aus einem Material besteht, welches unter Einwirkung von Scherkräften durch ein fließendes Material eine Ausdehnung erfährt. Das dehnungssensitive Messkabel weist dabei besonders bevorzugt elastische Eigenschaft auf, sodass es über den zu erwartenden Bereich der auftretenden Scherkräfte des fließenden Materials in Längsrichtung eine elastische Dehnung erfährt. In Bezug auf eine Steifigkeit im Querschnitt kann das Messkabel sowohl starr als auch biegefähig ausgestaltet sein. Der Begriff Messkabel kann somit sowohl einen im Wesentlichen starren Stab oder ein im Wesentlichen biegefähiges Kabel meinen. Bevorzugt ist jedoch ein biegefähiges Kabel, welches sich besonders einfach in verschiedene Formen eine Kanals einbringen lässt.

Entlang des dehnungssensitiven Messkabels wird eine ortsverteilte Dehnungsmessung durchgeführt. Unter einer Dehnung (E) wird bevorzugt eine Angabe für eine relative Längenänderung des Messkabels verstanden. Unter einer Dehnungsmessung wird sowohl die Messung einer Dehnung (positives 8) als eine Stauchung (negatives E) verstanden. Ortsverteilt meint, dass eine Messung der Dehnung an mindestens zwei, bevorzugt jedoch deutlich mehr, beispielsweise 10, 100 oder Messpunkten entlang des Messkabels erfolgt. Bevorzugt erfolgt die ortsverteilte Dehnungsmessung über die gesamte Länge des Messkabels. Es kann aber auch bevorzugt sein, dass eine ortsverteilte Dehnungsmessung nur über einen Teilabschnitt des Messkabels, beispielsweise 25%, 50%, 75% oder mehr erfolgt.

Zu diesem Zweck können verschiedene Messkabel und Messverfahren eingesetzt werden. Beispielsweise kann es bevorzugt sein ein faseroptisches Messkabel zu nutzen und eine ortsverteilte Dehnungsmessung mittels einer elastischen Rayleigh Streuung und optischen Frequenzbereichs-Reflektometrie (*OFDR, optical frequency domain reflectometry*) durchzuführen.

Zu diesem Zweck kann eine monochromatische Lichtquelle verwandt werden, dessen optische Frequenz linear moduliert werden kann. Beispielsweise eignet sich ein verstellbarer Laser, um die Dehnung des faseroptischen Messkabels anhand des rückgestreuten Lichts ortsverteilt auszumessen. Die Dehnung als relative Längenänderung des Messkabels kann dabei bevorzugt den Vergleich zu einer Referenzmessung darstellen, bei welcher in dem Kanal kein Material fließt oder aber sich ein Material mit bekannter Viskosität und Fließrate bewegt.

Aber auch andere ortsverteilte Dehnungsmessungen sind denkbar. Beispielsweise kann das Messkabel mindestens zwei bevorzugt, 10, 100 oder mehr elektrische oder optische Dehnungsmessstreifen umfassen, welche ebenfalls bevorzugt gegenüber einer Referenzmessung eine ortsverteilte Dehnung erfassen.

Durch die ortsverteilte Dehnungsmessung kann die tangentiale Kraft die ein fließendes Material auf das dehnungssensitive Messkabel ausübt gemessen werden. Hierbei wird ausgenutzt, dass sich die viskositätsabhängigen Scherkräfte die das fließenden Material auf die Oberfläche des Messkabels übertragen, das Messkabel proportional dehnen.

Vorteilhafterweise kann die ortverteilte Dehnung somit als ein relatives Maß für die viskositätsabhängigen Scherkräfte sowohl mit einer hohen örtlichen, als auch zeitlichen Auflösung aufgezeichnet werden. Für die vorgenannte optische Frequenzbereichs-Reflektometrie (OFDR) konnten beispielsweise dynamische Dehnungsmessungen für ein 10 m langes Kabel mit einer örtlichen Auflösung von bis zum 10 cm, bei einer zeitlichen Auflösung von bis zu 20 Hz erreicht werden (Zhou et al. 2016).

Erfindungsgemäß wurde erkannt, dass eine Überwachung oder Messung der Eigenschaften des fließenden Materials unmittelbar anhand der ortsverteilten Dehnungsmessung zu Ungenauigkeiten führt. Insbesondere wurde erkannt, dass Änderungen des Druckes oder der Temperatur in dem Kanal dazu führen, dass sich das Messkabel unabhängig von Fließverhalten dehnt oder staucht. Ist ein Messkabel beispielsweise anhand zweier Ankopplungspunkte in dem Kanal befestigt, können die Position der mechanischen Ankopplungspunkte aufgrund der Druck- oder Temperaturänderungen schwanken, wodurch sich das Messkabel unabhängig vom Fließverhalten dehnt oder staucht. Insbesondere bei Erkundungs-, Produktions-, Injektions- oder Monitoringbohrungen kann die zeitliche resultierende Dehnung aufgrund von Druck- oder Temperaturschwankungen, eine Dehnung, welche durch Scherkräfte der Bohrflüssigkeiten auftreten, um mehrere Größenordnungen überschreiten.

Eine ggf. naheliegende Möglichkeit bestünde darin kontinuierliche und ortsverteilte Temperatur- und Druckmessungen durchzuführen, um den besagten Effekt zu korrigieren. Ein solches Verfahren ist jedoch aufwändig und zudem aufgrund der zusätzlich notwendigen Messdaten fehlerbehaftet.

Stattdessen wurde von den Erfindern erkannt, dass eine mindestens abschnittsweise Bestimmung eines Dehnungsgradienten aus den Messdaten über die ortsverteilte Dehnung des Messkabels auf überraschend einfache Weise die Messgenauigkeit des Verfahrens erhöht. Ein Dehnungsgradient meint dabei bevorzugt den Quotienten aus der Differenz zweier Dehnungen an zwei Positionen entlang des Messkabels und des Abstand der beiden Positionen. Der Dehnungsgradient kann daher als $(\varepsilon(p1) - \varepsilon(p2))/|p1-p2|$ verstanden werden, wobei $\varepsilon(p1)$ und $\varepsilon(p2)$ die Messwerte der ortsverteilten Dehnungsmessung an den beiden Positionen p1 und p2 sind, und |p1-p2| den Abstand, zwischen den Positionen meint.

Während die ortsverteilte Dehnungsmessung mithin bevorzugt dimensionslos ist, hat der daraus bestimmbare Dehnungsgradient bevorzugt die Dimension [1/Länge].

Abschnittsweise meint, dass über mindestens einen (Teil)Abschnitt der ortsverteilten Dehnungsmessungen ein Dehnungsgradient erhalten wird. Ein Abschnitt entspricht dabei bevorzugt dem Bereich zwischen zwei Positionen p1 und p2, für welche der Dehnungsgradient bestimmbar ist.

Bevorzugt erfolgt eine abschnittsweise Bestimmung der Dehnungsgradienten über die gesamte ortsverteilte Dehnungsmessung, besonders bevorzugt über die gesamte Länge des Messkabels. Es kann aber beispielsweise auch nur eine Bestimmung über einen ausgewählten Bereich des Messkabels bzw. des Kanals erfolgen, welcher von besonderem Interesse ist.

Weiterhin ist es bevorzugt die abschnittsweise Bestimmung der Dehnungsgradienten mit einem konstanten Abstand der Relativpositionen (p1 und p2) durchzuführen. Es können aber auch entlang der Länge des Messkabels verschiedene Abstände genommen werden.

Je größer der Abstand der beiden Positionen p1 und p2, desto besser kann ein Messrauschen gemittelt werden. Der Abstand der beiden Positionen sollte jedoch hinreichend klein sein, um sicherzustellen, dass zwischen den Positionen zeitlich keine signifikanten Druckänderungen oder Temperaturänderungen auftreten. Im Falle eines vertikalen Bohrlochs treten i.d.R. bspw. hydraulische Höhenunterschiede auf, welche zu einem konstanten Druckunterschied zwischen den Positionen führen. Da diese zeitlich konstant sind, werden sind diese auch schon während der Referenzmessung vorhanden und werden daher herausgerechnet im Vergleich zu einer folgenden Messung. Auch ist es bevorzugt, dass im Falle der Ankopplung des Messkabels an einem, zwei oder mehreren mechanischen Ankopplungspunkten der Abstand zwischen den Positionen kleiner ist als der Abstand zwischen den Ankopplungspunkten.

Durch die Bestimmung eines abschnittsweisen Dehnungsgradienten kann vorteilhafterweise der Anteil der Dehnung der durch die Scherkräfte des fließenden Materials bedingt ist, mit hoher Genauigkeit bestimmt werden. Eine Dehnung, welche aufgrund der Änderungen der Temperatur oder Drücke erfolgt, wird vorteilhafterweise über den gewählten Abschnitt konstant sein, sodass der Dehnungsgradient (im Gegensatz zur Dehnung an den jeweiligen Positionen) im Wesentlichen ausschließlich die physikalischen Eigenschaften des fließenden Materials reflektiert.

Neben der beschriebenen höheren Robustheit des Verfahrens gegenüber Druck- oder Temperaturschwankungen zeichnet sich das Verfahren erfindungsgemäß dadurch aus, dass aus dem Dehnungsgradienten eine Überwachung oder Messung der Viskosität erfolgt.

Die Viskosität bezeichnet bevorzugt die Zähflüssigkeit oder Zähigkeit von Flüssigkeiten, Gasen, aber auch pulverförmigen Feststoffen. In einfachen Worten ist ein Material desto dickflüssiger (weniger fließfähig) je größer die Viskosität ist, während ein Fluid desto dünnflüssiger (fließfähiger) ist, je niedriger die Viskosität ist. Bevorzugt handelt es sich um die Scherviskosität, welche den Widerstand des Materials gegenüber einer Scherung meint. Das Verfahren kann sowohl zur Überwachung oder Messung der dynamischen Viskosität ($\eta$), als auch der kinematischen Viskosität ($v$) genutzt werden. Ein Fachmann weiß, dass diese sich über die Dichte ($\varrho$) wie folgt in einander umrechnen lassen:

$$\eta = \varrho * v.$$

Die Erfinder haben erkannt, dass auf Basis einer Messung des Dehnungsgradienten unter zu Hilfenahme der Gesetzmäßigkeiten der Strömungsmechanik vorteilhafterweise unmittelbar die Viskosität berechnet werden kann.

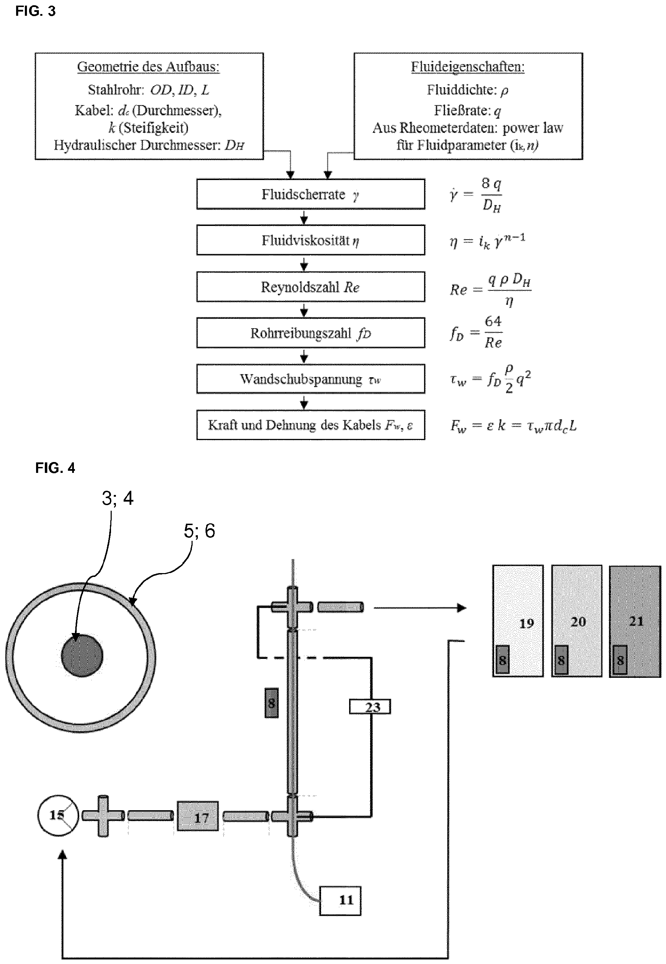

In Figur 3 werden die maßgeblichen Grundgleichungen und Zusammenhänge aufgelistet mit deren Hilfe analytisch die Viskosität aus dem Dehnungsgradienten eines Messkabels bestimmt werden kann.

Abhängig von der Fließrate (q) und dem hydraulischen Durchmesser ($D_H$) kann eine Fluidscherrate ($\gamma$) bestimmt werden, welche proportional zur (Fluid)Viskosität ($\eta$) sind. Eine Rohrreibungszahl (darcy friction factor $f_D$) lässt sich aus der Reynolds Nummer (Re) bestimmen. Mit diesem Faktor lässt sich die Wandschubspannung (wall shear stress, $\tau_w$) bestimmen. Die Wandschubspannung ist es, welche auf die Oberfläche des Messkabels wirkt, wobei in Abhängigkeit der Elastizität (k) des Messkabels, dieses eine Dehnung (E) erfährt.

Die Gleichung lassen sich wie folgt umstellen, wodurch deutlich wird, dass die Viskosität proportional zum Dehnungsgradienten des Messkabels ist.

Gleichung 1:

$$\eta = \frac{DH\ k}{32\ \pi\ q\ dc}\ \frac{\Delta\varepsilon}{\Delta L}$$

Der Proportionalitätsfaktor hängt von dem hydraulischen Durchmesser $D_H$, der Steifigkeit bzw. Elastizität des Messkabels k, des Kabeldurchmessers dc und der Fließrate q ab. Diese Parameter sind für den experimentellen Aufbau vorgegeben bzw. lassen sich, wie z.B. die Fließrate, mit einfachen Mitteln während der Durchführung des Verfahrens bestimmen.

Vorteilhafterweise muss der Proportionalitätsfaktor, aber auch nicht bekannt sein um eine Überwachung oder Messung der Viskosität durchzuführen. Beispielsweise ließe sich das Verfahren auch nutzten, um die Änderung der Viskosität mit hoher zeitlicher und räumlicher Auflösung zu überwachen. Hierzu würde die Änderung des Dehnungsgradienten bereits direkt eine proportionale Änderung der Viskosität anzeigen.

Wird für einen technischen Prozess - z.B. in der Lebensmittelindustrie - beispielsweise vorgeben, dass die Viskosität nur eine gewisse prozentuale Änderungen erfahren darf, reicht bereits die Bestimmung der relativen Viskosität anhand des Dehnungsgradienten aus, um eine effektive Überwachung des Prozesses zu gewährleisten.

Für einige Anwendung ist es jedoch von Vorteil, wenn eine absolute Viskosität bestimmt bzw. gemessen wird.

In einer bevorzugten Ausführungsform ist das Verfahren dadurch gekennzeichnet, dass eine Messung der Viskosität unter Bereitstellung und/oder Bestimmung eines Proportionalitätsfaktors zwischen Dehnungsgradient und Viskosität erfolgt, wobei der Proportionalitätsfaktor von der Fließrate des Materials, des hydraulischen Durchmessers des Kanals, der Steifigkeit des Messkabels und/oder des Durchmessers des Messkabels abhängt.

Die Steifigkeit bzw. Elastizität des Messkabels sowie der Durchmesser des Messkabels lassen sich auf einfache Weise durch einen Fachmann bestimmen. Beispielsweise lassen sich diese messen und/oder theoretisch berechnen.

Der hydraulische Durchmesser bezeichnet bevorzugt eine rechnerische Größe, die zur Berechnung von Druckverlust und Durchsatz in Kanälen herangezogen werden kann, wenn der Querschnitt des Kanals von der Kreisform abweicht. Der hydraulischen Durchmesser soll mithin für einen Strömungskanal mit einem beliebigen Querschnitt näherungsweise den Durchmesser desjenigen kreisrunden Kanals zu ermitteln, welcher bei gleicher Länge und gleicher mittlerer Strömungsgeschwindigkeit den gleichen Druckverlust wie der gegebene Strömungskanal aufweist. Für einen Ringspalt zwischen zwei konzentrischen Rohren mit Durchmesser D (z.B. dem inneren Durchmesser des Kanals) bzw. d (z.B. dem äußeren Durchmesser des Messkabels) ist der hydraulischen Durchmesser näherungsweise D-d. Unter Kenntnis der geometrischen Abmaße lässt sich somit der hydraulischen Durchmesser berechnen. Bevorzugt sollte das Messkabel klein gegenüber dem hydraulischen Durchmesser sein und daher in der Praxis bei der Berechnung vom hydraulischen Durchmesser vernachlässigt werden können.

Die Fließrate q entspricht bevorzugt dem Durchfluss bzw. Volumenstrom und meint das pro Zeiteinheit durch den Kanal fließende Volumen des Materials. Die Fließrate kann entweder aufgrund anderer Prozessparameter bekannt sein. Beispielsweise kann das Verfahren im Rahmen eines Prozesses angewandt werden, bei dem eine Pumpe mit festgelegter Pumprate ein fließendes Material durch einen Kanal pumpt. Die Fließrate kann jedoch auch mit Hilfe weiterer Sensoren, wie beispielsweise eines Durchflussmessers bestimmt werden.

In einer bevorzugten Ausführungsform ist das Messkabel ein faseroptisches Messkabel.

Ein faseroptisches Messkabel vereint vorteilhafterweise nicht nur sehr gute elastische Eigenschaften als dehnungssensitives Kabel, sondern eignet sich zudem besonders für eine ortsverteilte Dehnungsmessung auf Basis optischer Methoden.

Unter einem faseroptischen Messkabel werden bevorzugt Lichtwellenleiter oder Lichtkabel verstanden (engl. *optical fiber*). Lichtwellenleiter umfassen bevorzugt einen oder mehrere Lichtleiter, die aus Fasern beispielsweise aus Quarzglas oder Polymeren gebildet werden und Licht leiten können. Zu diesem Zweck umfassen die Lichtwellenleiter bevorzugt einen Mantel mit einem Brechungsindex, welcher niedriger als der des Kernes ist, um eine Totalreflektion zu ermöglichen. Lichtwellenleiter finden auf verschiedenen technischen Gebieten Anwendung, wobei die Nachrichtentechnik eine der Verbreitesten darstellt. Es ist jedoch auch bekannt, dass Lichtwellenleiter beispielsweise für eine ortsverteilte Dehnungsmessung verwendbar sind. In bevorzugten Ausführungsformen ist das Verhältnis des Kabeldurchmessers zur Kabelsteifigkeit (Parameter k) möglichst hoch, da hierdurch bei gleicher Kraftwirkung die Deformation des Kabels vergrößert werden und sich dessen Sensitivität erhöht.

Systeme, die eine ortsverteilte Dehnungsmessung auf Basis von Lichtwellenleitern erlauben werden in der Fachliteratur als *distributed straining sensing* (DSS) bezeichnet und umfassen in der Regel eine modulierbare Lichtquelle (vorzugsweise einen modulierbaren Laser), einen Detektor sowie einen Lichtwellenleiter als faseroptisches Messkabel. Verschiedene Systeme und Verfahren zur Durchführung einer ortsverteilte Dehnungsmessung mittels eines faseroptischen Messkabels sind dem Fachmann bekannt und werden beispielsweise in Masoudi et al. 2016 offenbart.

In einer bevorzugten Ausführungsform erfolgt die ortsverteilte Dehnungsmessung auf Basis einer Brillouin-Streuung, bevorzugt einer *Brillouin optical time domain reflectometry* (BOTDR) oder *Brillouin optical time domain analysis* (BOTDA), einer Raman-Streuung und/oder einer Rayleigh-Streuung, bevorzugt einer *optical time domain reflectometry* (OTDR) oder einer *optical frequency domain reflectometry* (OFDR) erfolgt.

Eine Rayleigh-Streuung bezeichnet bevorzugt eine elastische Streuung elektromagnetischer Wellen an Teilchen, deren Durchmesser klein im Vergleich zur Wellenlänge ist. Im Kontext eines faseroptischen Messkabels können zufällig verteilte Inhomogenitäten in der Messfaser ausgenutzt werden, um anhand darin rückgestreuten Lichtes eine ortsverteilte Dehnungsmessung durchzuführen.

Eine Brillouin-Streuung bezeichnet bevorzugt eine optische Streuung an thermisch generierten akustischen Phononen, welche im faseroptischen Messkabel auftreten. Da die Intensität und Frequenz eines Brillouin gestreuten Lichtes von der Dehnung und Temperatur des faseroptischen Messkabel abhängigen, kann der Effekt zur ortsverteilten Dehnungsmessung genutzt werden (Maughan et al. 2010).

Das Prinzip der *optical frequency domain reflectometry* (OFDR) basiert auf der von Eickhoff et al. 1981 offenbarten Ausmessung von Lichtwellenleitern als Funktion der Frequenz von Rayleigh rückgestreutem Licht. Hierbei wird eine monochromatische Lichtquelle beispielsweise ein Laser in einen Lichtwellenleiter bzw. faseroptisches Messkabel eingekoppelt und derart gesteuert, dass einen frequenzmodulierten Lichtstrahl emittiert wird, der lineare Frequenzrampen aufweist. Um das rückgestreute Licht ortsverteilt aufzulösen wird dieses mit der monochromatischen Lichtquelle überlagert, sodass an einem Detektor Schwebungen (*beats*) gemessen werden können. Die Frequenz der Schwebungen gibt Aufschluss darüber, wo der Lichtstrahl im faseroptisches Messkabel rückgestreut wurde. Signale mit kleineren Schwebungsfrequenzen korrespondieren zu vorderen Abschnitten des faseroptischen Messkabels, während Signale mit größeren Schwebungsfrequenzen von hinteren Abschnitten des faseroptischen Messkabels stammen. Mittels entsprechend Frequenzanalyse beispielsweise mit Hilfe eine Fourier Transformation können die einzelnen Komponenten des detektierten rückgestrahlten Lichtes räumlich entlang der Länge des faseroptische Messkabels aufgelöst werden.

Eine Anwendung des Prinzips zur ortsverteilten Dehnungsmessung (*distributed strain sensing*) wurde erstmals von Froggatt et al. 1998 vorgeschlagen. Hierbei wird ausgenutzt, dass in einem faseroptischen Messkabel Inhomogenitäten auftreten, welche mittels der obig beschriebenen OFDR ausgemessen werden können. Da bei einer Dehnung der Abstand der Inhomogenitäten sich ändert, kann eine Messung der räumlicher Verteilung der Inhomogenitäten unmittelbar ausgenutzt werden, um eine ortsverteilte Dehnung des faseroptischen Messkabels zu erhalten.

Eine ortsverteilte Dehnungsmessung auf Basis einer OFDR ist besonders vorteilhaft zur Überwachung oder Messung der Viskosität fließender Materialien in einem Kanal, besonders bevorzugt in einem Bohrloch. So zeigt sich, dass Dehnungen eines faseroptischen Messkabels bei typischen Flüssigkeiten und Fließgeschwindigkeiten lediglich der Größenordnung $10^{-6}$. Insbesondere für derart kleine ortsverteilte Dehnungen liefert die OFDR ausgezeichnete Ergebnisse. Auch kann für diesen Messbereich dehnungsabhängige Verschiebungen der Inhomogenitäten vernachlässigt werden.

Neben einem OFDR Verfahrens können auch andere ortsverteilte Dehnungsmessungen auf Basis einer Brillouin-Streuung, einer Raman-Streuung und/oder einer Rayleigh-Streuung durchgeführt werden. Beispielsweise eigenen sich bevorzugt ebenso eine *Brillouin optical time domain reflectometry* (BOTDR), *Brillouin optical time domain analysis* (BOTDA) oder auch eine *optical time domain reflectometry* (OTDR).

Auch bei diesen Messmethoden kommt eine monochromatische Lichtquelle, bevorzugt ein Laser, sowie ein Detektor zum Einsatz, um räumlich aufgelöst die Dehnung der optischen Messfaser zu detektieren. Bei der *optical time domain reflectometry* werden Lichtpulse in das faseroptischen Messkabels gesandt und am selben Ende das Raleigh zurückgestreute Licht als eine zeitliche Spur detektiert, wobei jeder Punkt der Spur einen räumlich Abschnitt des Messkabels repräsentiert. Bevorzugt kann beispielsweise auf Basis der Detektion von Phasendifferenzen der rückgestreuten Lichtpulse von unterschiedlichen Abschnitten des Messkabels Informationen über die ortverteilte Dehnung erhalten werden (GB 2222247 A, Masoudi et al. 2016).

Eine *Brillouin optical time domain reflectometry* (BOTDR) basiert auf einem ähnlichen Prinzip wie eine OTDR, wobei jedoch die spontane Brillouin-Streuung an thermischen generierten akustischen Phononen ausgenutzt wird, um eine ortsverteilte Dehnungsmessung durchzuführen (Masoudi et al. 2016, Alahbabi 2004, Wang et al. 2013). *Brillouin optical time domain analysis* (BOTDA) ist eine Variante der BOTDR, bei der die Lichtpulse von beiden Seiten in ein optisches Messkabel geleitet werden, wodurch das Signal-zu-Rausch-Verhältnis erhöht werden kann (Masoudi et al. 2016, Chaube et al. 2008).

Ein Fachmann kennt die vorgenannten Messverfahren und weiß, welche weiteren Komponenten neben einem faseroptischen Messkabel (beispielsweise eine Lichtquelle, eine Detektor, eine Datenverarbeitungsvorrichtung etc.) benötigt werden, um die Messverfahren zur ortsverteilten Dehnungsmessungen auszuführen. Neben seinem Fachwissen kann er hierzu auf Übersichtsartikel wie Masoudi et al. 2016 sowie den darin zitierten Referenzen zurückgreifen.

In einer weiteren Ausführungsform umfasst das faseroptische Messkabel zwei oder mehr lokalisierte elektrische oder optische Dehnungsmessstreifen.

Elektrische Dehnungsmessstreifen sind im Stand der Technik bekannt nutzen bevorzugt die Eigenschaft elektrisch leitender Metalle, dass sich bei einer Dehnung oder Stauchung mit der damit verursachten Längen- und Querschnittsänderung auch der elektrische Widerstand ändert. Im angestrebten Arbeitsbereich von elektrischen Dehnungsmessstreifen (DMS) liegt hier eine lineare Abhängigkeit vor (Gleichung).

$$\frac{\Delta R}{R} = k \frac{\Delta l}{l}$$

Hierbei kennzeichnet ΔR/R die relative Änderung des elektrischen Widerstand, während ΔI/I die relative Längenänderung betrifft. Der Faktor k kennzeichnet den Proportionalitätsfaktor zwischen den beiden Größen. Metallische DMS haben k Faktoren von ca. 2 und Halbleiter DMS wie z.B. DMS aus monokristallinem Silizium weisen k Faktoren im Bereich von 100 auf. Ein hoher k Faktor ermöglicht eine wesentlich höhere Empfindlichkeit der Widerstandsmessung. Werden elektrische DMS für die Messung von z.B. Scherspannungen in strömenden Fluiden eingesetzt, sind Halbleiter DMS vorteilhaft im Verglich zu metallischen DMS, da hier sehr geringe Scherspannungen, von wenigen N/m² auftreten und ein möglichst großer k Faktor für eine ausreichende Genauigkeit notwendig ist. Halbleiter DMS sind allerdings aufwendiger und kostenintensiver in der Herstellung.

DMS müssen kraftschlüssig auf einen sog. Federkörper aufgebracht werden. Dieser Federkörper kann das selbst zu vermessende Bauteil sein, vorliegend das Messkabel, oder er kann speziell auf die zu messende Kraft, wie z.B. Scherspannungen in Strömungen, angepasster Messkörper mit bekanntem (strömungs-) mechanischem Verhalten sein.

Eine ortsverteilte Dehnungsmessung insbesondere über längerer Strecken mit elektrischen DMS wie z.B. in einem Bohrloch, eingeschränkter als bei distributed strain sensing (dss) Verfahren möglich. Hierbei ist an jedem Ort der ortsverteilten Messung ein DMS vorzusehen. Der DMS liefert dann die Dehnung am installierten Ort. Entsprechend einer spezifisch geforderten örtlichen Auflösung, sind dann entsprechend viele DMS vorzusehen. Jeder DMS ist mit eigenen Messkabeln auszustatten, was bei hoher ortsverteilter Auflösung und langer Messstrecke wie z.B. Bohrungen einen erhöhten Verkabelungsaufwand zur Folge hat.

Der Verkabelungsaufwand kann durch den Einsatz von BUS Systemen zur digitalen Messwertübertragung verringert werden. Hierfür können Buskoppler verwandt werden, die das Messsignal in ein digitales Bussignal wandelt.

In einer weiteren Ausführungsform erfolgt die ortsverteilte Dehnungsmessung auf Basis einer Dehnungsmessung mittels zwei oder mehr Faser-Bragg-Gitter (FBG) Sensoren und/oder Fabry-Perot-Interferenz (FPI) Sensoren.

Die einzelnen FBG können beispielsweise mittels UV-Licht (z. B. ein Excimer-Laser mit λ = 248 nm) in die Glasfaser eingeschrieben werden. Im Faserkern entsteht eine periodische Modulation des Brechungsindex mit Bereichen mit hohem und niedrigem Brechungsindex, die das Licht einer bestimmten Wellenlänge reflektieren. Die mittlere Wellenlänge der Filterbandbreite in Singlemodefasern wird durch die Bragg-Bedingung gegeben. Eine Deformation der Faser führt dann zur Änderung der mittleren Wellenlänge. Da die FBG eingeschrieben werden müssen, wird eine Dehnung nur an diskreten ortsverteilten Faserintervallen gemessen.

In einer bevorzugten Ausführungsform erfolgt die Messung und/oder Überwachung der Viskosität zeit- und ortsaufgelöst entlang des Messkabels, wobei die Ortsauflösung bevorzugt höher als 2 m, besonders bevorzugt höher als 1 m beträgt und die zeitliche Auflösung bevorzugt mindestens 0.01 Hz, besonders bevorzugt mindesten 0.1 Hz beträgt. Besonders bevorzugt können für die Ortsauflösung Bereiche zwischen 5 cm und 2 m, bevorzugt zwischen 20 cm und 1 m sein. Für die zeitliche Auflösung sind Werte zwischen beispielsweise 0,01 Hz und 1 Hz möglich, bevorzugt zwischen 0.02 Hz und 0,1 Hz.

Vorteilhafterweise erlaubt die ortsverteilte Dehnungsmessung und Bestimmung eines Dehnungsgradienten eine zeit- und ortsaufgelöste Überwachung oder Messung der Viskosität. Die Auflösung kann dabei je nach Anwendung eingestellt werden, wobei sich o.g. Parameter sich als besonders vorteilhaft für die Überwachung des Fließverhaltens von Materialien in Bohrlochanwendungen herausgestellt haben. Bevorzugte Ortsauflösung für beliebige Anwendungen können sich an der Funktion der Sensitivität bzw. Elastizität des Messkabels, der Genauigkeit der verwendeten Messeinheiten sowie der Fließrate und Viskosität des fließenden Materials orientieren.

Für die Aufhängung und Installation des faseroptischen Messkabels in dem Kanal können verschiedene Varianten bevorzugt zum Einsatz kommen. Zum einen kann das Messkabel an einem, zwei oder mehr Ankopplungspunkten unmittelbar an der Innenwand des Kanals befestigt werden. Im Falle eines Bohrloches als Kanal kann das Messkabel somit an einer oder mehrere diskreter Stelle an der Rohr- oder Bohrlochwand aufgehangen bzw. befestigt werden.

Es kann aber auch bevorzugt sein, dass eine starre separate Aufhängestruktur, wie beispielsweise ein Hilfsgestell in den Kanal einzubringen, an welchem das Messkabel an einem, zwei oder mehr Ankopplungspunkten befestigt vorliegt. Auch kann es möglich sein, dass das Messkabel sich über Ankopplungspunkte kraftschlüssig verbunden im Zentrum eines Messstabes befindet, wobei sich die durch eine Umströmung ergebenden Dehnungen des Stabes auf das Messkabel übertragen.

Im Sinne der Erfindung meint ein Ankopplungspunkt bevorzugt eine mechanische Kopplung an einer diskreten Position, welche ortsfest in Bezug auf den Kanal ist, und sich nicht mit dem fließenden Material bewegt. Als Ankopplungspunkte eignen sich beispielsweise Kabelschellen, Ösen, Haken, Klemmen oder dergleichen, welche entweder direkt mit der Innenwand des Kanals, eine separaten starren Aufhängestruktur oder eines Messstabes installiert werden.

In einer bevorzugten Ausführungsform liegt das Messkabel in dem Kanal an einem diskreten Ankopplungspunkt befestigt vor und der Dehnungsgradient wird flussabwärts von dem Ankopplungspunkt gemessen. Besonders bevorzugt ist es in dieser Ausführungsform, dass das Kabel an genau einem diskreten Ankopplungspunkt befestigt vorliegt und ansonsten frei im Kanal vorliegt. Bevorzugt kann der Kanal vertikal entlang der Schwerkraft ausgerichtet sein, wie es typischerweise für Bohrlöcher der Fall ist.

In dieser Ausführungsform hängt das Messkabel bevorzugt aufgrund seines eigenen Gewichtes flussabwärts von dem Ankopplungspunkt in dem Kanal. Flussabwärts bevorzugt in Flussrichtung des fließenden Materials. Im Falle einer bevorzugten vertikalen Ausrichtung des Kanals und Verwendung eines Ankopplungspunktes fällt flussabwärts bevorzugt mit der Richtung der Schwerkraft zusammen. Im Allgemeinen ist dies jedoch nicht der Fall. Beispielsweise ist es auch denkbar, dass bei einem in Bezug auf die Schwerkraft horizontalen Kanal, ein Kabel an nur einem Ankopplungspunkt aufzuhängen ist, wobei das Kabel durch die Fließbewegung des Materials in dem Kanal in der horizontalen Richtung gestreckt wird und je nach Fließgeschwindigkeit flussabwärts eine Dehnung erfährt.

In einer besonders bevorzugten Ausführungsform ist das Messkabel in dem Kanal an mindestens zwei diskreten Ankopplungspunkten befestigt und der Dehnungsgradient wird zwischen den mindestens zwei diskreten Ankopplungspunkten bestimmt.

Durch diese Ausführungsform ist eine besonders flexible Handhabung und sichere Anbringung des Messkabels in dem Kanal möglich. Bevorzugt wird der Abstand der Ankopplungspunkte so gewählt, dass dieser größer ist als die Ortsauflösung des ortverteilten Dehnung bzw. des daraus bestimmten Dehnungsgradienten.

Hierdurch kann besonders effektiv gewährleistet werden, dass ein temperatur- oder druckabhängiger Drift der Ankopplungspunkte keinen oder nur einen zu vernachlässigen Einfluss auf die Bestimmung der Viskosität hat.

In einer bevorzugten Ausführungsform weist das Messkabel eine fluidstromunabhängige Vorspannung auf. Im Falle zweier Ankopplungspunkte können diese derart beabstandet seien und die Befestigung des Messkabels an selbigen derart erfolgen, dass das Messkabel eine fluidstromunabhängige Vorspannung aufweist. Dies meint, dass das Kabel auch ohne ein fließendes Material bereits unter einer Vorspannung steht und gegenüber einem kraftfreien Ruhezustand eine Dehnung erfährt. Vorteilhafterweise liegt hierdurch bei einer Referenzmessung eine der Vorspannung entsprechenden Dehnung vor, sodass auch bei sehr kleinen Materialflüssen keine Stauchung auftreten kann. Die kleinste Dehnung entspricht der Vorspannung und das fließende Material führt in Abhängigkeit der Viskosität und Fließrate zu einer weiteren Dehnung. Da hierdurch Stauchungen ausgeschlossen werden, kann auf besonders einfache Weise sichergestellt werden, dass die Messung in einem linearen Dehnungsbereich des Messkabels erfolgen.

Es kann aber auch im Falle von zwei Ankopplungspunkten bevorzugt sein, dass das Messkabel zwischen den Ankopplungspunkten keine Vorspannung oder sogar eine negative Vorspannung (Stauchung) aufweist und erst durch die Scherkräfte eines fließenden Materials in den Bereich der Dehnung gegenüber einem kraftfreien Ruhezustand überführt wird. Ebenso kann es bevorzugt sein, dass bei Verwendung von nur einem Ankopplungspunkt das Messkabel bei vertikaler Ausrichtung ein Zusatzgewicht aufweist, um eine fluidstromunabhängige Vorspannung zu gewährleisten.

In einer bevorzugten Ausführungsform weist das Messkabel eine äußere Oberflächenmodifizierung auf, um die Krafteinwirkung des fließenden Materials auf das Messkabel zu erhöhen. Eine derartige Oberflächenmodifizierung erhöht bevorzugt die Rauigkeit der Oberfläche des Messkabels, wobei die Rauigkeit ein Maß für die Unebenheit der Oberflächenhöhe des Messkabels darstellt. Die Rauigkeit kann bevorzugt als mittlere Rauigkeit, quadratische Rauigkeit oder gemittelte Rauigkeit quantifiziert werden kann.

Die Oberflächenmodifizierung kann einer mikroskopischen Erhöhung der Oberflächenrauigkeit entsprechen, wozu sich beispielsweise Sandstrahlen, Ätzen, Bedampfen, Rollieren, ein Schleifen mit grober Schleifkorngröße oder andere Verfahren der Oberflächenmodifizierung eignen.

Die Oberflächenmodifizierung kann jedoch auch in einem gezielten Einbringen makroskopischer Strukturen bestehen, welche die Unebenheit der Oberflächenhöhe des Messkabels erhöhen. Beispielsweise können Stachel, Stifte, Plättchen oder andere Strukturen im Wesentlichen senkrecht zur Oberfläche Messkabels angebracht werden.

Durch die Erhöhung der Unebenheit oder Rauigkeit der Oberfläche des faseroptischen Messkabels, erhöht sich die Wandschubspannung bzw. Scherkraft die ein fließendes Material auf das Messkabel ausübt. Hierbei können auch turbulente Effekte an der Oberfläche des Messkabels auftreten, welche als ein zusätzlicher empirischer Faktor in die Gleichung 1 eingehen und zu einem kleineren Proportionalitätsfaktors zwischen Dehnungsgradient und Viskosität führen. Vorteilhafterweise erhöht sich durch derartige Oberflächenmodifizierungen die Sensitivität des Messkabels, d.h. bei ansonsten gleichen Fließraten und Viskosität des fließenden Mediums können bei einem oberflächenmodifizierten Messkabel größere Dehnungsgradienten gemessen werden, als bei einem Messkabel mit einer glatteren Oberfläche. Im Umkehrschluss lassen sich hierdurch vorteilhafterweise auch die Viskosität besonders dünnflüssiger und ggf. langsam fließenden Material präzise ausmessen oder überwachen.

Vorteilhafterweise lässt sich das beschriebene Verfahren zur Überwachung verschiedenster fließender Materialien einsetzen, welche von Lebensmitteln, über Erdöl bis hin zu Baumaterialien reichen können.

In einer bevorzugten Ausführungsform wird das Verfahren zur Überwachung oder Messung der Viskosität eines fließenden Material verwandt, welches ausgewählt ist aus einer Gruppe enthaltend Bohrfluid, Zementschlamm, Erdöl, Bitumen, Wasser, Gas, Bohrspülung oder Kombination dieser. Für diese Materialien können besonders zuverlässige Messergebnisse erzielt werden. Zudem ist eine Überwachung der vorgenannten Materialien für geologische Erkundungs-, Produktions- oder Monitoringbohrungen von höchstem Interesse.

In einer bevorzugten Ausführungsform ist wird das Verfahren zur Überwachung oder Messung der Viskosität eines fließenden Materials in einem Kanal verwandt, welcher ein Bohrloch ist. Besonders bevorzugt sind hierbei Bohrlöchern mit Tiefen von mehr als 10 m, bevorzugt mehr als 100 m, mehr als 1000 m.

Die Möglichkeit der Bestimmung von Dehnungsgradienten und Viskosität entlang eines dehnungsaktiven Messkabels über große Distanzen von 1 km oder mehr führen zu einer besonders starken Verbesserung eines Monitoring bei geologischen Bohrungen, welche mit den Mitteln des Stand der Technik nicht möglich war.

Die beschriebenen Vorteile des Verfahrens zur Überwachung oder Messung der Viskosität eines fließenden Materials in einem Kanal lassen sich jedoch ebenso in der Lebensmitteltechnik, in der Tiefbautechnik, Pumptechnik, Transporttechnik (beispielsweise Öl-Pipelines) einsetzen, um die dortigen Prozesse in gewünschter Weise zu steuern und kontrollieren.

In einer weiteren Ausführungsform betrifft die Erfindung ein System zur Messung und/oder Überwachung der Viskosität eines in einem Kanal fließenden Materials umfassend

- ein dehnungssensitives Messkabel konfiguriert zur Einbringung in den Kanal
- eine Messeinheit umfassend Mittel zur ortverteilten Dehnungsmessung entlang des Messkabels und
- eine Datenverarbeitungsvorrichtung umfassend Mittel zur mindestens abschnittsweisen Bestimmung eines Dehnungsgradienten aus Messdaten über die ortsverteilte Dehnung des Messkabels sowie zur Messung und/oder Überwachung der Viskosität des in dem Kanal fließenden Materials anhand des ermittelten Dehnungsgradienten.

Das System ist dafür konfiguriert das erfindungsgemäße Verfahren sowie bevorzugten Ausführungsformen davon durchzuführen. Der Fachmann erkennt, dass bevorzugte Ausführungsformen, welche im Zusammenhang mit dem Verfahren beschrieben wurden gleichermaßen für das System bevorzugt sind und zu den beschrieben Vorteilen führt. Beispielsweise wurde für das Verfahren offenbart, dass ein bevorzugtes dehnungssensitives Messkabel ein faseroptisches Messkabel, welches sich beispielsweise für hochsensitive ortsverteilte Dehnungsmessungen wie OFDR, OTDR, BOTDR oder BOTDA eignen. Der Fachmann entnimmt der Offenbarung, dass gleichermaßen in einer bevorzugten Ausführungsform das System ein faseroptisches Messkabel umfasst, wobei besonders bevorzugt die Messeinheit und Datenverarbeitungseinheit für die vorgenannten ortsverteilten Dehnungsmessungen konfiguriert sind.

Im Sinne der Erfindung bezeichnet eine Messeinheit bevorzugt eine Einheit jener Komponenten, welcher zur Durchführung einer ortsverteilten Dehnungsmessung notwendig sind. Im Falle optischer Methoden, wie OFDR, OTDR, BOTDR oder BOTDA, umfasst die Messeinheit bevorzugt eine monochromatische Lichtquelle und einen Detektor. Je nach bevorzugter ortsverteilten Dehnungsmessung kann es bevorzugt sein, dass die Messeinheit zudem beispielsweise einen akustooptischen Modulator (AOM) oder einen elektrooptischen Modulator (EOM) zur Modulation des von der Lichtquelle ausgesandten Lichtstrahles aufweist. Auch können weitere optische Komponenten wie Linsen, Filter etc. Bestandteil der Messeinheit sein sowie weitere elektronische Komponenten wie Analog-zu-Digital-Wandler oder insbesondere Steuer- oder Datenverarbeitungseinheiten (Integrierte Schaltkreise, Mikrochips, Mikrokontroller), welche beispielsweise die Lichtquelle und den Detektor regulieren können, Messdaten aus rückgestreutem Licht über eine ortsverteilte Dehnungsmessung auswerten und zur Weitergabe an eine Datenverarbeitungseinheit bereitstellen können.

Dem Fachmann ist der Aufbau und die Funktionsweise geeigneter Messeinheiten insbesondere zur Durchführung optischer Methoden zur ortsverteilten Dehnungsmessung in faseroptischen Kabeln, wie die OFDR, OTDR, BOTDR oder BOTDA bekannt. Hierbei kann er neben seinem Fachwissen auf Übersichtsartikel wie Masoudi et al. 2016 sowie den darin zitierten Referenzen zurückgreifen.

Vorteilhafterweise können auch kommerziell erhältliche Systeme als Messeinheiten eingesetzt werden. Beispielsweise sind die *Optical Backscatter Reflectometer* (OBR) der Firma Luna bevorzugt geeignete Messeinheiten zur Durchführung einer ortsverteilte Dehnungsmessung auf Basis rückgestreutem Lichtes. Mit Hilfe eines derartigen OBR kann beispielsweise eine örtliche Auflösung von 2 cm bei einer Faserlänge von bis zu 70 m und eine örtliche Auflösung von 50 cm bei einer Faserlänge von 1000 m erreicht werden.

Die Datenverarbeitungseinheit ist bevorzugt eine Einheit, welche zum Empfang, Senden, Speichern und/oder Verarbeiten von Daten, bevorzugt von Messdaten, geeignet und konfiguriert ist. Die Datenverarbeitungseinheit umfasst bevorzugt einen integrierter Schaltkreis, ein Prozessor, ein Prozessorchip, Mikroprozessor oder Mikrokontroller zur Verarbeitung von Daten, sowie einen Datenspeicher, beispielsweise eine Festplatte, einen *random access memory* (RAM), einen *read-only memory* (ROM) oder auch einen *flash memory* zur Speicherung der Daten.

Zur Durchführung der mindestens abschnittsweisen Bestimmung eines Dehnungsgradienten aus Messdaten über die ortsverteilte Dehnung des Messkabels sowie zur Messung und/oder Überwachung der Viskosität des in dem Kanal fließenden Materials anhand des ermittelten Dehnungsgradienten kann auf der Datenverarbeitungsvorrichtung bevorzugt ein Computerprogramm gespeichert vorliegen, welches Befehle umfasst, die genannten Schritte auszuführen.

Besonders bevorzugt ist die Datenverarbeitungseinrichtung ein Personal Computer, ein Laptop, ein Tablet oder dergleichen, welche neben Mitteln zum Empfang, Senden, Speichern und/oder Verarbeiten von Daten auch ein Anzeigen der Daten sowie eine Eingabemittel umfassten, wie beispielsweise ein Keyboard, ein Maus, ein Touchscreen etc.. Zudem kann die Datenverarbeitungseinheit bevorzugt auch genutzt werden, um die Messeinheit zu steuern, d.h. beispielsweise Parameter für die Durchführung der ortsverteilten Dehnungsmessung vorzugeben.

Auch weitere Analysen oder Aufbereitungen der Messdaten kann durch die Datenverarbeitungseinheit vorgenommen werden. Beispielsweise kann das System neben der Messeinheit zur Durchführung einer ortsverteilten Dehnungsmessung auch weitere Sensoren wie Temperatursensoren, Drucksensoren oder Durchflussmesser zur Bestimmung der Fließrate umfassen. Bevorzugt kann die Datenverarbeitungseinheit dafür konfiguriert sein, auch die zusätzlichen Messdaten der weiteren Sensoren aufzunehmen und zu verarbeiten, um eine Überwachung und/oder Messung der Viskosität durchzuführen.

**FIGUREN**

Im Folgenden soll die Erfindung an Figuren näher erläutert werden, ohne auf diese beschränkt zu sein.

**Figur 1** zeigt eine schematische Darstellung eines dehnungssensitiven Messkabels, welches mittig in einem Rohr angebracht ist.

**Figur 2** zeigt eine bevorzugte Installation eines dehnungssensitiven Messkabels in einem Bohrloch mit theoretischem Dehnungsprofil bei der Fluidbewegung

**Figur 3** zeigt Gleichungen der Strömungsmechanik und einen analytische Ansatz zur Bestimmung der Viskosität aus der Dehnung eines Messkabels

**Figur 4** zeigt eine schematische Darstellung eines Versuchsaufbaus zur Durchführung des Verfahrens

**Figur 5** zeigt photographischen Ansichten eines Versuchsaufbaus zur Durchführung des Verfahrens

**Figur 6** zeigt optische Dehnungsdaten bei konstanter Fließrate mit Fluiden verschiedener Viskosität.

**BEISPIELE**

Des Weiteren soll die Erfindung anhand von Beispielen näher erläutert werden, ohne auf diese beschränkt zu sein.

*Beispiel 1 - Messverfahren*

Zur Analyse der Kraft die auf die Oberfläche des Messkabels wirkt und der daraus resultierende Deformation/Längung können verschiedene Verfahren eingesetzt werden. Die Verformungsmessung kann dabei prinzipiell elektrisch oder optisch durchgeführt werden z.B. mittels lokalisierter elektrischer oder optischer Dehnungsmessstreifen oder auch ortsverteilt mittels Dehnungsmessungen entlang einer optischen Faser. Bevorzugt ist für eine Messung des Dehnungsgradienten zur Viskositätsbestimmung, dass mindestens zwei unabhängige Messpunkte entlang einer Messstrecke (entweder hinter einem oder zwischen zwei Ankopplungspunkten) ausgewertet werden können.

In dem Beispiel 3 (Experimenteller Versuchsaufbau) wird die Technologie der ortsverteilten Dehnungsmessung basierend auf der elastischen Rayleigh Streuung genutzt. Diese wird über eine optische Frequenzbereichs-Reflektometrie (OFDR, *optical frequency domain reectometry*) ausgewertet. Die Dehnungsanalyse wird hierbei als Vergleich zwischen einer Referenzmessung ohne Zirkulation und einer Analysemessung während einer Zirkulation durchgeführt

*Beispiel 2 - Technischer Hintergrund und Ausführungsformen der Erfindung*

Mit Hilfe eines faseroptischen Messkabels können (beispielsweise in einem Bohrloch) ortsverteilte Dehnungsdaten erhoben werden. Die viskositätsabhängigen Scherkräfte die ein fließendes Fluid auf die Oberfläche des Messkabels übertragen, dehnen das Messkabel. Diese Dehnung und der Dehnungsgradient der optischen Messfaser können orts- und zeitaufgelöst ausgewertet werden, um daraus die Viskosität zu bestimmen.

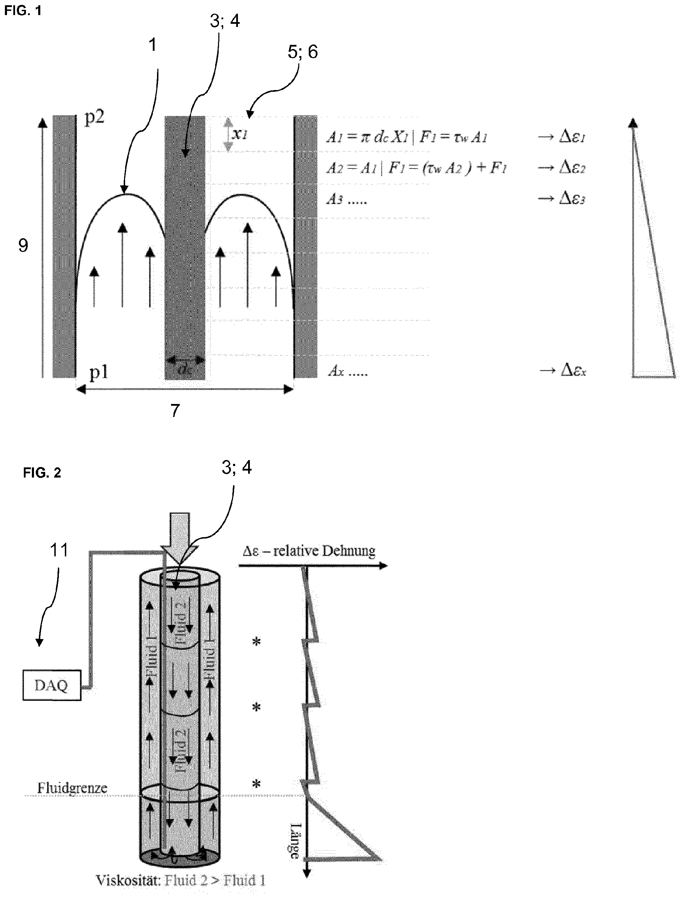

Figur 1 zeigt eine Skizze eines dehnungssensitiven Messkabels 3, welches mittig in einem Rohr 6 angebracht ist. Bei Fluidstrom bildet sich entlang des mechanisch isolierten Intervalls zwischen p1 und p2 ein relativer Dehnungsgradient. Dieser entsteht auf Grund einer Summe von Spannungen entlang von kurzen Abschnitten entgegen der Fließrichtung.

Das faseroptische Messkabel ist bevorzugt an der Rohrwand (Bohrlochwand) befestigt, sonst aber frei (evt. mit einer initialen Zugspannung versehen) im Fluidstrom angeordnet. Fallweise kann es auch (ggf. ebenfalls vorgespannt) kraftschlüssig verbunden im Zentrum eines Messstabs angeordnet sein, wobei sich die durch die Umströmung des Stabes ergebenden Dehnungen auf die Faser übertragen. In einer anderen Ausführungsform kann das dehnungssensitive Messkabel an einer oder mehreren Stellen an einem Hilfsgestell befestigt werden, das dann insgesamt in den zu untersuchenden Fluidstrom gebracht und befestigt wird.

Figur 2 skizziert ein installiertes faseroptisches Messkabel 4 in einem Bohrloch. Zwischen den Ankopplungspunkten 13 entstehen relative Dehnungsgradienten bei einer Fluidbewegung. Die Ankopplungspunkte 13 weisen einen bevorzugten Abstand von 6 m auf. Das Fluid erzeugt durch die Strömung eine tangentiale Kraft (Reibung) auf das dehnungssensitive Messkabel 3 und damit eine ortsabhängige Dehnung der optischen Faser. Diese Dehnung kann optisch erfasst werden. Aus dem Dehnungsverlauf entlang des Messkabels 3 lässt sich (ggf. zeitaufgelöst) die Fluidviskosität ableiten.

Eine Besonderheit des Messprinzips ist die Auswertung des Dehnungsgradienten über Faserintervalle, welche mechanisch am Bohrloch (z.B. an der Verrohrung) gekoppelt sind. Druck und Temperaturänderungen können dazu führen, dass die Positionen der mechanischen Ankopplungspunkte nicht gleichbleibend sind, was zur Folge hat, dass sich das Messkabel zwischen zwei Punkten insgesamt dehnt bzw. staucht. Die Auswertung des Dehnungsgradienten ist insbesondere vorteilhaft, wenn der Punktabstand und die Fensterlänge der ortsverteilten Dehnungsmessung kleiner ist, als der Abstand der Ankopplungspunkte. Der Dehnungsgradient liefert ebenfalls gute Ergebnisse, wenn nur ein Ankopplungspunkt verfügbar ist und die Fasermessstrecke in Fließrichtung des Fluid orientiert ist.

*Beispiel 3 - Theoretischer Hintergrund und Grundlegende Gleichungen der Strömungsmechanik*

Grundlegende Gleichungen aus der Strömungsmechanik können verwendet werden, um die Schubspannung zu bestimmen, die das strömende Fluid auf das Kabel ausübt.

Figur 3 fasst einen analytischen Ansatz zusammen, mit welchem man aus einer ortsverteilten Dehnungsmessung bzw. des daraus bestimmbaren Dehnungsgradienten Rückschlüsse auf die Fluidviskosität ziehen kann.

Abhängig von der Fließrate und dem hydraulischen Durchmesser kann eine Fluidscherrate bestimmt werden. Die Fließrate und der hydraulischen Durchmesser können für einen experimentellen Aufbau bekannt sein oder durch einfache Messungen erhalten werden. Die Fluidscherrate ist proportional zur Viskosität. Durch Rheometermessungen im Labor lassen sich die Parameter korrelieren. Die Rohrreibungszahl (darcy friction factor) lässt sich aus der Reynolds Nummer bestimmen. Mit diesem Faktor lässt sich die Wandschubspannung (wall shear stress) bestimmen. Diese Spannung wirkt auf der Oberfläche des Messkabels und erzeugt eine ortsverteilte Dehnung, welche detektierbar ist.

*Beispiel 4 - Experimenteller Versuchsaufbau*

Anhand eines konkreten Versuchsaufbaus soll eine mögliche Durchführung des Verfahrens erläutert werden.

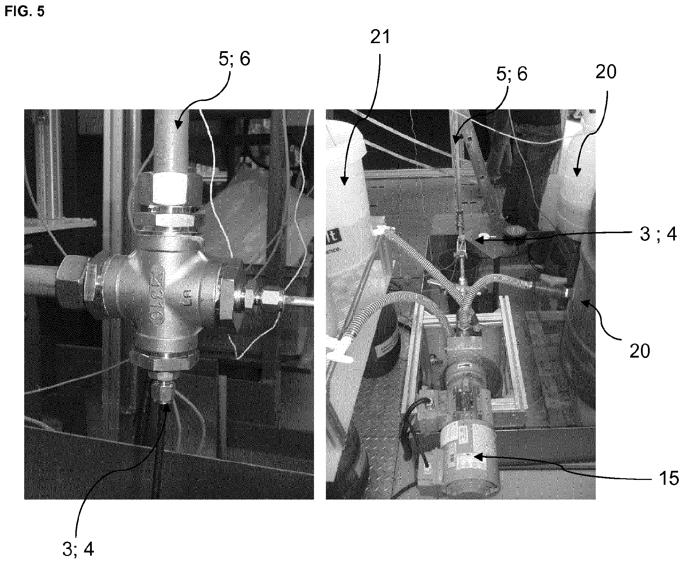

In dem in den Figuren 4 und 5 gezeigten Versuchsaufbau wird ein faseroptisches Messkabel 4 in einer Rohrleitung 6 so installiert, dass die Wandschubspannungen von strömenden Fluiden gemessen werden können. Das faseroptische Messkabel ist eine *single mode* Glasfaser mit Acrylate-Coating. Das Messkabel weist einen Durchmesser von 0,55 cm auf.

Es werden Fluide mit verschiedener Viskosität zirkuliert und ortsverteilte Dehnungsmessungen aufgezeichnet. Zur Zirkulation wird eine Exzenterschneckenpumpe (AFJ 10B) 15 verwandt. Ein Durchflussmesser 17 misst die Fließrate. Als Messeinheit 11 zur Bestimmung der ortsverteilten Dehnung wird das optische Messsystem OBR 4400 der Firma Luna verwandt. Ein Differenzdrucksensor 23 misst den Druckunterschied über einen Abschnitt des Stahlrohres 6. Ebenso liegt eine Temperatursensor 8 bevorzugt im oder am Rohr 6 vor. Die Flüssigkeiten können durch Fluidbehälter 19-21 bereitgestellt werden.

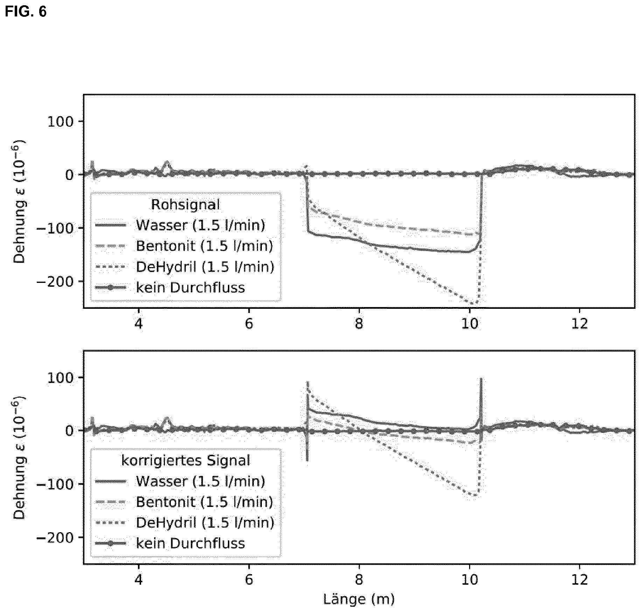

Figur 6 zeigt die Dehnungsdaten bei konstanter Fließrate mit Fluiden verschiedener Viskosität, welche mit einem faseroptischen Messkabel gemessen wurden. Das Fluid mit der höchsten Viskosität ist DeHydril. Bentonit ist weniger viskos. Das Fluid mit der niedrigsten Viskosität ist Wasser. Negative Dehnungswerte bedeuten eine relative Kompression bzw. Stauchung des Messkabels, positive Dehnungswerte eine relative Dehnung.

Die Figur 6 verdeutlicht, dass der Dehnungsgradient bei höherer Viskosität deutlich steiler zwischen den Ankopplungspunkten ist. Das Rohsignal zeigt die tatsächlich gemessenen Daten. Das korrigierte Signal kompensiert für die thermische Dehnung des Versuchsstands bei Zirkulation von Fluiden mit verschiedenen Temperaturen.

Bezugszeichenliste

1    fließendes Material
3    dehnungssensitives Messkabel
4    faseroptisches Messkabel
5    Kanal
6    Rohr
7    Innerer Durchmesser des Kanals
8    Temperatursensor
9    Länge des Kanals
11   Messeinheit

13    Ankopplungspunkt
15    Pumpe
17    Durchflussmesser
19    Fluidbehälter für Wasser
20    Fluidbehälter für Bentonite
21    Fluidbehälter für DeHydril
23    Differenzdrucksensor
25    Temperatursensor

**REFERENZEN**

Masoudi A. and Trevor P. REV. OF SC INSTRUMENTS 87, 011501 (2016).
Eickhoff W. and R. Ulrich, Appl. Phys. Lett. 39, 693 (1981).
Froggatt M. and J. Moore, Appl. Opt. 37, 1735 (1998).
Maughan S.M. , H. H. Kee, and T. P. Newson, Meas. Sci. Technol. 12, 834 (2001).
Alahbabi M. N., Y. T. Cho, and T. P. Newson, Opt. Lett. 29, 26 (2004).
Wang F., X. Zhang, X. Wang, and H. Chen, Opt. Lett. 38, 2437 (2013).
Chaube P. , B. G. Colpitts, D. Jagannathan, and A.W. Brown, IEEE Sens. J. 8, 1067 (2008).
Zhou D. , Z. Qin, W. Li, L. Chen, and X. Bao, Opt. Express 20, 13138 (2012)).

**Patentansprüche**

1.   Verfahren zur Messung und/oder Überwachung der Viskosität eines in einem Kanal (5) fließenden Materials (1) umfassend die folgenden Schritte

    a. Einbringen eines dehnungssensitiven Messkabels (3) in den Kanal (5)
    b. Messung einer ortverteilten Dehnungsmessung entlang des Messkabels (3), wobei das Messkabel der Länge nach in Fließrichtung des fließenden Materials ausgerichtet vorliegt, sodass unter Einwirkung tangentialer Scherkräfte des fließenden Materials das Messkabel in Längsrichtung eine Dehnung erfährt
    c. Abschnittsweise Bestimmung eines Dehnungsgradienten aus den Messdaten über die ortsverteilte Dehnung des Messkabels (3)
    d. Messung und/oder Überwachung der Viskosität des in dem Kanal (5) fließenden Materials (1) anhand des ermittelten Dehnungsgradienten.

2.   Verfahren gemäß dem vorherigen Anspruch
    **dadurch kennzeichnet, dass**
    eine Messung der Viskosität unter Bereitstellung und/oder Bestimmung eines Proportionalitätsfaktors zwischen Dehnungsgradient und Viskosität erfolgt, wobei der Proportionalitätsfaktor von der Fließrate des Materials, des hydraulischen Durchmessers des Kanals (5), der Steifigkeit des Messkabels (3) und/oder des Durchmessers des Messkabels (3) abhängt.

3.   Verfahren gemäß einem der vorherigen Ansprüche
    **dadurch kennzeichnet, dass**
    das Messkabel (3) ein faseroptisches Messkabel (4) ist.

4.   Verfahren gemäß dem vorherigen Anspruch 3
    **dadurch kennzeichnet, dass**
    die ortsverteilte Dehnungsmessung auf Basis einer Brillouin-Streuung, bevorzugt einer *Brillouin optical time domain reflectometry* (BOTDR) oder *Brillouin optical time domain analysis* (BOTDA), einer Raman-Streuung und/oder einer Rayleigh-Streuung, bevorzugt einer *optical time domain reflectometry* (OTDR), besonders bevorzugt einer *optical frequency domain reflectometry* (OFDR) erfolgt.

5.   Verfahren gemäß einem der vorherigen Ansprüche
    **dadurch kennzeichnet, dass**
    das Messkabel (3) zwei oder mehr lokalisierte elektrische oder optische Dehnungsmessstreifen umfasst.

6. Verfahren gemäß dem Anspruch 3
   **dadurch kennzeichnet, dass**
   die ortsverteilte Dehnungsmessung auf Basis einer Dehnungsmessung mittels zwei oder mehr Faser-Bragg-Gitter (FBG) Sensoren und/oder Fabry-Perot-Interferenz (FPI) Sensoren erfolgt.

7. Verfahren gemäß einem der vorherigen Ansprüche
   **dadurch kennzeichnet, dass**
   die Messung und/oder Überwachung der Viskosität zeit- und ortsaufgelöst entlang des Messkabels (3) erfolgt, wobei die Ortsauflösung bevorzugt höher als 2 m, besonders bevorzugt höher als 1 m ist und die zeitliche Auflösung bevorzugt mindestens 0.01 Hz, besonders bevorzugt mindestens 0.05 Hz beträgt.

8. Verfahren gemäß einem der vorherigen Ansprüche
   **dadurch kennzeichnet, dass**
   das Messkabel (3) in dem Kanal (5) an einem diskreten Ankopplungspunkt befestigt vorliegt und der Dehnungsgradient flussabwärts von dem Ankopplungspunkt gemessen wird.

9. Verfahren gemäß einem der vorherigen Ansprüche
   **dadurch kennzeichnet, dass**
   das Messkabel (3) in dem Kanal (5) an mindestens zwei diskreten Ankopplungspunkten befestigt vorliegt und der Dehnungsgradient zwischen den mindestens zwei diskreten Ankopplungspunkten (13) bestimmt wird.

10. Verfahren gemäß einem der vorherigen Ansprüche
    **dadurch kennzeichnet, dass**
    das Messkabel (3) eine fluidstromunabhängige Vorspannung aufweist.

11. Verfahren gemäß einem der vorherigen Ansprüche
    **dadurch kennzeichnet, dass**
    das Messkabel (3) eine äußere Oberflächenmodifizierung aufweist, um die Krafteinwirkung des fließenden Materials (1) auf das Messkabel (3) zu erhöhen.

12. Verfahren gemäß einem der vorherigen Ansprüche
    **dadurch kennzeichnet, dass**
    der Kanal (5) ein Bohrloch und/oder Rohr (6) ist.

13. Verfahren gemäß einem der vorherigen Ansprüche
    **dadurch kennzeichnet, dass**
    das Material ausgewählt ist aus einer Gruppe enthaltend Bohrfluid, Zementschlamm, Erdöl, Bitumen, Wasser, Gas, Bohrspülung oder Kombination dieser.

14. System zur Messung und/oder Überwachung der Viskosität eines in einem Kanal (5) fließenden Material (1), konfiguriert um das Verfahren nach einem der Ansprüche 1-13 durchzuführen, umfassend

    - ein dehnungssensitives Messkabel (3) konfiguriert zur Einbringung in den Kanal (5)
    - eine Messeinheit (11) konfiguriert zur ortverteilten Dehnungsmessung entlang des Messkabels (3), wobei das Messkabel der Länge nach in Fließrichtung des fließenden Materials ausgerichtet vorliegt, sodass unter Einwirkung tangentialer Scherkräfte des fließenden Materials das Messkabel in Längsrichtung eine Dehnung erfährt und
    - eine Datenverarbeitungsvorrichtung umfassend Mittel zur mindestens abschnittsweisen Bestimmung eines Dehnungsgradienten aus Messdaten über die ortsverteilte Dehnung des Messkabels (3) sowie zur Messung und/oder Überwachung der Viskosität des in dem Kanal (5) fließenden Materials (1) anhand des ermittelten Dehnungsgradienten.

**Claims**

1. A method for measuring and/or monitoring the viscosity of a material (1) flowing in a channel (5) comprising the following steps

a. Introducing a strain-sensitive measuring cable (3) into the channel (5)

b. Measuring a spatially distributed strain measurement along the measuring cable (3), wherein the measuring cable is aligned lengthwise in the direction of flow of the flowing material so that the measuring cable is stretched in the longitudinal direction under the influence of tangential shear forces of the flowing material

c. Sectionally determining a strain gradient from the measurement data on the spatially distributed strain of the measuring cable (3)

d. Measuring and/or monitoring the viscosity of the material (1) flowing in the channel (5) using the strain gradient determined.

2. The method according to the preceding claim
**characterised in that**
there is a measurement of the viscosity with provision and/or determination of a proportionality factor between strain gradient and viscosity, wherein the proportionality factor depends on the flow rate of the material, the hydraulic diameter of the channel (5), the stiffness of the measuring cable (3), and/or the diameter of the measuring cable (3).

3. The method according to any of the preceding claims
**characterised in that**
the measuring cable (3) is a fibre optic measuring cable (4).

4. The method according to preceding claim 3
**characterised in that**
the spatially distributed strain measurement is based on Brillouin scattering, preferably *Brillouin optical time domain reflectometry* (BOTDR) or *Brillouin optical time domain analysis* (BOTDA), Raman scattering, and/or Rayleigh scattering, preferably *optical time domain reflectometry* (OTDR), especially preferably *optical frequency domain reflectometry* (OFDR).

5. The method according to any of the preceding claims
**characterised in that**
the measuring cable (3) comprises two or more localised electrical or optical strain gauges.

6. The method according to claim 3
**characterised in that**
the spatially distributed strain measurement is based on a strain measurement using two or more fibre Bragg grating (FBG) sensors and/or Fabry-Perot interference (FPI) sensors.

7. The method according any of the preceding claims
**characterised in that**
the measurement and/or monitoring of the viscosity takes place along the measuring cable (3) in a time- and space-resolved manner, wherein the spatial resolution is preferably greater than 2 m, especially preferably greater than 1 m, and the time resolution is preferably at least 0.01 Hz, especially preferably at least 0.05 Hz.

8. The method according to any of the preceding claims
**characterised in that**
the measuring cable (3) is fixed in the channel (5) at a discrete coupling point and the strain gradient is measured downstream of the coupling point.

9. The method according to any of the preceding claims
**characterised in that**
the measuring cable (3) is fixed in the channel (5) at at least two discrete coupling points and the strain gradient is determined between the at least two discrete coupling points (13) .

10. The method according to any of the preceding claims
**characterised in that**
the measuring cable (3) has a bias that is independent of the fluid flow.

11. The method according to any of the preceding claims
**characterised in that**
the measuring cable (3) has an outer surface modification in order to increase the force of the flowing material (1) on the measuring cable (3).

12. The method according to any of the preceding claims
**characterised in that**
the channel (5) is a borehole and/or a tube (6).

13. The method according to any of the preceding claims
**characterised in that**
the material is selected from a group consisting of drilling fluid, cement slurry, petroleum, bitumen, water, gas, drilling fluid, or a combination thereof.

14. A system for measuring and/or monitoring the viscosity of a material (1) flowing in a channel (5), configured to carry out the method according to any of claims 1-13, comprising

- a strain-sensitive measuring cable (3) configured for introduction into the channel (5)
- a measuring unit (11) configured for the spatially distributed strain measurement along the measuring cable (3), wherein the measuring cable is aligned lengthwise in the direction of flow of the flowing material so that the measuring cable is stretched in the longitudinal direction under the influence of tangential shear forces of the flowing material, and
- a data processing device comprising means for determining, at least in sections, a strain gradient from measurement data on the spatially distributed elongation of the measuring cable (3), and for measuring and/or monitoring the viscosity of the material (1) flowing in the channel (5) using the strain gradient determined.

**Revendications**

1. Procédé de mesure et/ou de surveillance de la viscosité de matières coulantes (1) dans un canal (5), comprenant les étapes suivantes

a. Introduction d'un câble de mesure sensible à l'étirement (3) dans le canal (5)
b. Mesure d'une mesure d'étirement répartie dans l'espace le long du câble de mesure (3), dans lequel le câble de mesure est orienté longitudinalement dans le sens d'écoulement des matières coulantes, de sorte que le câble de mesure est étiré dans le sens longitudinal sous l'influence des forces de cisaillement tangentielles des matières coulantes
c. Détermination sectionnelle d'un gradient d'étirement à partir des données de mesure sur l'étirement réparti dans l'espace du câble de mesure (3)
d. Mesure et/ou surveillance de la viscosité de la matière coulante (1) dans le canal (5) à l'aide du gradient d'étirement déterminé.

2. Procédé selon la revendication précédente
**caractérisé en ce que**
une mesure de la viscosité avec préparation et/ou détermination d'un facteur de proportionnalité entre le gradient d'étirement et la viscosité a lieu, dans lequel le facteur de proportionnalité dépend du débit des matières, du diamètre hydraulique du canal (5), de la rigidité du câble de mesure (3) et/ou du diamètre du câble de mesure (3).

3. Procédé selon l'une des revendications précédentes
**caractérisé en ce que**
le câble de mesure (3) est un câble de mesure à fibre optique (4) .

4. Procédé selon la revendication précédente 3
**caractérisé en ce que**
la mesure d'étirement répartie dans l'espace sur la base d'une diffusion Brillouin, de préférence *d'une réflectométrie optique dans le domaine temporel* Brillouin (BOTDR) ou *l'analyse optique dans le domaine temporel de Brillouin* (BOTDA), d'une diffusion Raman et/ou d'une diffusion Rayleigh, de préférence d'une *réflectométrie optique dans le domaine temporel* (OTDR), de manière particulièrement préférée d'une *réflectométrie optique dans le domaine fréquentiel* (OFDR).

5. Procédé selon l'une des revendications précédentes

**caractérisé en ce que**
le câble de mesure (3) comprend deux jauges de mesure d'étirement électriques ou optiques localisées ou plus.

6. Procédé selon la revendication 3
   **caractérisé en ce que**
   la mesure d'étirement répartie dans l'espace basée sur une mesure de déformation à l'aide de deux capteurs à réseau de Bragg (FBG) et/ou capteurs d'interférence Fabry-Perot (FPI) ou plus.

7. Procédé selon l'une des revendications précédentes
   **caractérisé en ce que**
   la mesure et/ou la surveillance de la viscosité a lieu avec résolution temporelle et spatiale le long du câble de mesure (3), dans lequel la résolution spatiale est de préférence supérieure à 2 m, de manière particulièrement préférée supérieure à 1 m, et la résolution temporelle est de préférence d'au moins 0,01 Hz, en particulier de préférence d'au moins 0,05 Hz.

8. Procédé selon l'une des revendications précédentes
   **caractérisé en ce que**
   le câble de mesure (3) est fixé dans le canal (5) à un point de couplage discret et le gradient d'étirement est mesuré en aval du point de couplage.

9. Procédé selon l'une des revendications précédentes
   **caractérisé en ce que**
   le câble de mesure (3) est fixé dans le canal (5) en au moins deux points de couplage discrets et le gradient d'étirement est déterminé entre les au moins deux points de couplage discrets (13) .

10. Procédé selon l'une des revendications précédentes
    **caractérisé en ce que**
    le câble de mesure (3) présente une précontrainte indépendante du débit de fluide.

11. Procédé selon l'une des revendications précédentes
    **caractérisé en ce que**
    le câble de mesure (3) présente une modification de surface extérieure afin d'augmenter la force des matières coulantes (1) sur le câble de mesure (3).

12. Procédé selon l'une des revendications précédentes
    **caractérisé en ce que**
    le canal (5) est un forage et/ou un tube (6).

13. Procédé selon l'une des revendications précédentes
    **caractérisé en ce que**
    les matières sont choisies dans un groupe contenant des fluides de forage, de coulis de ciment, de pétrole, de bitume, d'eau, de gaz, de fluide de forage ou d'une combinaison de ceux-ci.

14. Système de mesure et/ou de surveillance de la viscosité de matières coulantes (1) dans un canal (5), configuré pour mettre en œuvre le procédé selon l'une des revendications 1 à 13, comprenant

    - un câble de mesure sensible à l'étirement (3) configuré pour être inséré dans le canal (5)
    - une unité de mesure (11) configurée pour la mesure d'étirement répartie dans l'espace le long du câble de mesure (3), dans lequel le câble de mesure est orienté longitudinalement dans le sens d'écoulement des matières coulantes, de sorte que le câble de mesure est étiré dans le sens longitudinal sous l'influence des forces de cisaillement tangentielles des matières coulantes et
    - un dispositif de traitement de données comprenant des moyens pour déterminer, au moins par tronçons, un gradient d'étirement à partir de données de mesure sur l'étirement réparti dans l'espace du câble de mesure (3) ainsi que pour mesurer et/ou surveiller la viscosité des matières coulantes (1) dans le canal (5) à l'aide du gradient d'étirement déterminé.

**FIG. 1**

$$A_1 = \pi \, d_c \, X_1 \mid F_1 = \tau_w \, A_1 \qquad \rightarrow \Delta\varepsilon_1$$

$$A_2 = A_1 \mid F_1 = (\tau_w \, A_2) + F_1 \qquad \rightarrow \Delta\varepsilon_2$$

$$A_3 \, ..... \qquad \rightarrow \Delta\varepsilon_3$$

$$A_x \, ..... \qquad \rightarrow \Delta\varepsilon_x$$

**FIG. 2**

Δε – relative Dehnung

DAQ

Fluidgrenze

Länge

Viskosität: Fluid 2 > Fluid 1

**FIG. 3**

| Geometrie des Aufbaus: | Fluideigenschaften: |
|---|---|
| Stahlrohr: $OD, ID, L$ | Fluiddichte: $\rho$ |
| Kabel: $d_c$ (Durchmesser), $k$ (Steifigkeit) | Fließrate: $q$ |
| Hydraulischer Durchmesser: $D_H$ | Aus Rheometerdaten: power law für Fluidparameter ($i_k, n$) |

| | |
|---|---|
| Fluidscherrate $\dot{\gamma}$ | $\dot{\gamma} = \dfrac{8\,q}{D_H}$ |
| Fluidviskosität $\eta$ | $\eta = i_k\,\gamma^{n-1}$ |
| Reynoldszahl $Re$ | $Re = \dfrac{q\,\rho\,D_H}{\eta}$ |
| Rohrreibungszahl $f_D$ | $f_D = \dfrac{64}{Re}$ |
| Wandschubspannung $\tau_w$ | $\tau_w = f_D\,\dfrac{\rho}{2}\,q^2$ |
| Kraft und Dehnung des Kabels $F_w, \varepsilon$ | $F_w = \varepsilon\,k = \tau_w\,\pi d_c L$ |

**FIG. 4**

FIG. 5

**FIG. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6588266 B2
- US 20110088462 A1
- JP H07333133 A
- WO 2013165428 A1
- GB 2222247 A, Masoudi

**In der Beschreibung aufgeführte Nicht-Patentliteratur**

- **MASOUDI A. ; TREVOR P.** *REV. OF SC INSTRU-MENTS,* 2016, vol. 87, 011501
- **EICKHOFF W. ; R. ULRICH.** *Appl. Phys. Lett.,* 1981, vol. 39, 693
- **FROGGATT M.** *J. Moore, Appl. Opt.,* 1998, vol. 37, 1735
- **MAUGHAN S.M. ; H. H. KEE ; T. P. NEWSON.** *Meas. Sci. Technol.,* 2001, vol. 12, 834
- **ALAHBABI M. N. ; Y. T. CHO ; T. P. NEWSON.** *Opt. Lett.,* 2004, vol. 29, 26
- **WANG F. ; X. ZHANG ; X. WANG ; H. CHEN.** *Opt. Lett.,* 2013, vol. 38, 2437
- **CHAUBE P. ; B. G. COLPITTS ; D. JAGANNATHAN ; A.W. BROWN.** *IEEE Sens. J.,* 2008, vol. 8, 1067
- **ZHOU D. ; Z. QIN ; W. LI ; L. CHEN ; X. BAO.** *Opt. Express,* 2012, vol. 20, 13138